# EUROPÄISCHE PATENTSCHRIFT

(11) **EP 1 024 120 B1**
(45) Veröffentlichungstag und Bekanntmachung des Hinweises auf die Patenterteilung: **07.03.2012**
(21) Anmeldenummer: 00101496.8
(22) Anmeldetag: 26.01.2000
(51) Int. Cl.: C04B 24/12, C04B 40/00, C04B 111/34

(54) **Verfahren zur Reduzierung des Schwindens von hydraulischen Bindemitteln**
Method of reducing the shrinkage of hydraulic binders
Procédé de reduction du retrait des liants hydrauliques

(30) Priorität: 29.01.1999 CH 16599
(43) Veröffentlichungstag der Anmeldung: 02.08.2000
(73) Patentinhaber: Sika Technology AG, 6340 Baar (CH)
(72) Erfinder: Wombacher, Franz, 8966 Oberwil-Lieli (CH); Bürge, Theodor A., 8954 Geroldswil (CH); Mäder, Urs, 8500 Frauenfeld (CH)
(74) Vertreter: Sika Patent Attorneys

(56) Entgegenhaltungen:
- EP-A- 0 049 411
- WO-A-96/27565
- US-A- 3 583 880
- US-A- 4 223 138
- US-A- 4 424 283
- US-A- 4 975 122
- US-A- 5 389 143
- US-A- 5 603 760
- US-A- 5 622 558

## Beschreibung

Gegenstand der vorliegenden Erfindung ist ein Alkanolamin enthaltendes Mittel zur Reduktion von Schwinden in hydraulischen Bindemittel, wobei das besagte Mittel bestimmte Alkanolamine der Formel R-NH-(AOH) in Kombination mit Diolen und/oder Ethern enthält oder daraus besteht. Ausserdem wird ein Verfahren zur Reduzierung des Trocknungsschwindens von Bindemitteln wie Zement, Mischzement, Puzzolanen und daraus hergestellten Mörteln und Betonen mittels eines derartigen schwindreduzierenden Mittels (Schwindreduzierers) beschrieben.

Hydraulische Bindemittel-Systeme durchlaufen eine Reihe von Schritten während ihres vollständigen Erhärtungsprozesses. Die ersten Dimensionsänderungen vor dem Ansteifen, darunter plastisches Schwinden, können von der erhärtenden Masse noch aufgefangen und die daraus resultierenden Kräfte korrigiert werden. Die Volumenänderungen aufgrund von Wasserverlust im erhärteten Zustand können vom System jedoch nicht mehr kompensiert werden. Daher führen diese trotz ihrer geringen Grössenordnung zur Bildung von Rissen und Deformationen in dieser Masse. Durch diese Risse wird der Angriff von Substanzen auf den Zementstein und/oder allfällige Stahlbewehrung erleichtert und eindringendes Wasser kann durch Gefrieren zur Zerstörung des Gefüges führen. Im Gesamten wird die Dauerhaftigkeit eines Bauwerkes durch dieses Trocknungsschwinden drastisch reduziert.

Es sind bereits diverse Substanzen bekannt, welche das Trocknungsschwinden von Beton reduzieren. Die gebräuchlichsten dabei sind vor allem Glykole und Polyglykole sowie Glykolether und Polyglykolether. Dies sind alles Substanzen, welche das Schwinden reduzieren können. Daneben gibt es auch Typen, welche durch Expansion eine Kompensation der entstehenden Volumenreduzierung erreichen.

Unter diese Klasse fallen Stoffe, die in alkalischem Milieu Gase bilden, wie Hydrazinverbindungen (Stickstoff) oder Aluminiumpulver (Wasserstoff) sowie Eisenpulver, dessen Aktivität auf der Volumenvergrösserung bei der Bildung von Eisenoxid (Rost) basiert. Des weiteren kommen auch Calciumsulfoaluminate als Vorstufen zum voluminösen Ettringit und gebranntes Calciumoxyd zum Einsatz. Alle diese Stoffe sind Pulver und weisen daher Nachteile bei der Dosierung auf, zudem müssen sie in hohen Prozentanteilen zugegeben werden.
Gasbildner weisen Nachteile per se auf, da diese Gase auch schon vor dem Zusatz zum Beton entstehen können und Wasserstoffentwicklung wird allgemein auf einer Baustelle als kritisch betrachtet.

Die zementösen Vorstufen sind sehr stark von den herrschenden Bedingungen wie Zementzusammensetzung, Temperatur, Umgebungsfeuchte und Hydratisierungsgrad des Zementes abhängig und können zur spontanen Expansion im erhärteten Zustand führen. Die ebenfalls geförderte Ettringitbildung kann nachteilige Einflüsse auf die Dauerhaftigkeit eines solchen Bauwerkes haben.

Generell lässt sich auch festhalten, dass mit diesen Expansivwirkstoffen nur eine Korrektur des Startpunktes des anschliessenden Trocknungsschwindens erreicht wird. Die Grössenordnung des Schwindmasses an sich bleibt sich jedoch gleich und somit können Deformationen - wie oben erwähnt - trotzdem zu Schädigungen führen.

Diverse Hydroxylgruppen enthaltende Substanzen sind bereits als mögliche Schwindreduzierer bekannt. So werden niedrige Alkohole vorgeschlagen (JP 1-129578/89), welche jedoch aufgrund des tiefen Flammpunktes Probleme ergeben.

Höhermolekulare Systeme wie Alkohol-Alkylenoxid- oder Alkylphenol-Alkylenoxid-Addukte (z.B. JP 37259/81 oder 10947/87) müssen in sehr grossen Mengen zugegeben werden, um das gewünschte Resultat zu erzielen.

Auch verschiedene kleinere Polyole wurden schon vorgeschlagen. So werden von Schulze 1987 terminale Hydroxylverbindungen des Typs CₙH₂ₙ(OH)₂ als effektiv benannt (EP 0 308 950) und diverse Japanische Offenlegungsschriften (z.B: 55-027819 oder 06-072748) weisen auf ähnliche Typen oder Spezialfälle hin. In letzter Zeit wurden speziell sekundäre resp. tertiäre Alkandiole weiter untersucht und für wirksam befunden (WO 96/06058).

Etherhaltige Diole werden bereits allgemein 1985 von Goto als Schwindreduzierer erwähnt (US 4 547 223). Genauer spezifizierte Typen finden seit geraumer Zeit weitergehendes Interesse und werden als wirksam beschrieben (WO 95/30630 und WO 96/27563 von Shawl sowie WO 96/27564, WO 96/27565 und US 5 618 344 von Berke).
Als weitere Substanzklassen werden 1989 von Okuno wasserlösliche Aminoharze in Kombination mit Fettsäure-Metallsalzen erwähnt (EP 0 359 068). Abdelrazig dagegen berichtete 1994 von guten Ergebnissen mit Amiden resp. generell Formylverbindungen in US 5 326 396 und 5 326 397.

In bezug auf Alkanolamine lehrt US 3 583 880, dass das Schwinden poröser Produkte durch das Auftragen von u.a. Alkanolamine auf bereits hergestellte anorganische Körper reduziert werden kann. Abdelrazig (in US 5 389 143) schliesslich beschrieb 1995 α,β-Alkanolamine, die zwar wirksam das Schwinden reduzieren können aber leider sehr kostspielig sind. Die von Abdelrazig beschriebenen Alkanolamine weisen die allgemeine Formel 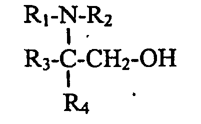 auf, wobei R₁ und R₂ unabhängig voneinander Wasserstoff oder eine lineare oder verzweigte Alkylgruppe sein können. R₃ und R₄ können ebenfalls unabhängig voneinander Wasserstoff oder eine lineare oder verzweigte Alkylgruppe sein, mit der Massgabe, dass R₃ und R₄ zusammengenommen mindestens 2 Kohlenstoffatome aufweisen müssen, so dass insbesondere R₃ = H und R₄ = H ausgeschlossen ist.

Alle diese erwähnten Schwindreduzierer weisen einen oder mehrere Nachteile auf. Sie sind aufgrund der hohen Dosierung und/oder ihres Herstellungspreises unwirtschaftlich, sie zerstören wegen ihrer Oberflächenaktivität die Wirkung von Luftporenbildnern, sie können wegen ihrer Brennbarkeit/Flammpunkt nicht sinnvoll auf Baustellen eingesetzt werden oder sie verzögern drastisch die Festigkeitsentwicklung der zementösen Systeme.

Es ist daher Aufgabe der vorliegenden Erfindung ein schwindreduzierendes Mittel sowie ein Verfahren zur Reduzierung des Schwindens von hydraulischen Bindemittel bereitzustellen, welches die oben genannten Nachteile wenigstens teilweise vermeidet. Ganz besonders war es eine Aufgabe der vorliegenden Erfindung einen Schwindreduzierer bereitzustellen, welcher einerseits kostengünstig, leicht herzustellen und unproblematisch handzuhaben ist und darüber hinaus eine gute schwindreduzierende Wirkung entfaltet. Ausserdem sollte durch den Schwindreduzierer nicht die Frostbeständigkeit des resultierenden Betons beeinträchtigt werden, indem infolge des Zusatzes des Schwindreduzierer die im Beton vorhandene Luftmenge auf ein zu niedriges Niveau absinkt. Eine weitere Aufgabe war es ein Verfahren zum Reduzieren des Schwindens von Beton bereitzustellen, welches insbesondere kostengünstig und rationell ist. Diese Aufgaben werden gemäss den unabhängigen Ansprüchen gelöst. Bevorzugte Ausführungsformen sind in den abhängigen Ansprüchen aufgeführt.

Das erfindungsgemässe Mittel zur Reduzierung des Schwindens von hydraulischen Bindemitteln enthält oder besteht aus
a) etwa 5-40 Gew.-% mindestens eines Alkanolamins der Formel I

   R-NH-(AOH),

   wobei R eine lineare oder verzweigtkettige aliphatische bzw.
   cyclische C₁-C₆-Alkylgruppe ist, vorzugsweise C₃-C₆ und A ist eine C₂H₄- bzw. C₃H₆-Gruppe, sowie
b) etwa 0-90 Gew.-% mindestens einer Hydroxyverbindung wobei die Hydroxyverbindung Diole sind und/oder
c) etwa 0-90 Gew.-% mindestens einer Etherverbindung,
wobei die Summe von b) und c) vorzugsweise mindestens etwa 60 Gew.-% beträgt.

In einer ganz speziell bevorzugten Ausführungsform enthält oder besteht das schwindreduzierende Mittel aus einer Kombination von
a) etwa 10-40 Gew.-% mindestens eines Alkanolamins der Formel I sowie
b) etwa 0-90 Gew.-% mindestens einer Hydroxyverbindung wobei die Hydroxyverbindungen Diole sind und/oder
c) etwa 0-90 Gew.-% mindestens einer Etherverbindung,
wobei die Summe von b) und c) mindestens etwa 60 Gew.-% beträgt.

Ganz besonders bevorzugte Alkanolamine sind ausgewählt aus der Gruppe umfassend N-Propylaminopropanol, N-Butylaminopropanol, 2-(n-Butylamino)-ethanol, 2-(tert.-Butyl-amino)-ethanol, 2-(Cyclohexylamino)-ethanol. Die Alkanolamine
können dabei sowohl in freier Form oder auch als Salze einer organischen oder anorganischen Säure oder als Salze einer Mischung solcher Säuren oder als Mischung der vorstehend genannten Formen vorliegen.

Die erfindungsgemäss verwendeten Alkanolamine unterscheiden sich von denjenigen von Abdelrazig (US 5 389 143) zum einen in der Tatsache, dass neben α,β-Alkanolaminen auch α,γ-Alkanolamine zur Anwendung kommen, während bezüglich den erfindungsgemäss verwendeten α,β-Alkanolaminen der Formel I nur diejenigen in Frage kommen, wo A eine C₂H₄ oder eine C₃H₆-Gruppe darstellt. Dieses Auswahlkriterium bezüglich der Alkanolamine hat den überragenden Vorteil, dass nur kostengünstige Alkanolamine zur Anwendung kommen, wobei entgegen allen Erwartungen, überraschenderweise auch mit diesen vergleichsweise einfachen Alkanolaminen der Formel I in Kombination mit den Diolen b) und/oder den Ethern c) eine hervorragende schwindreduzierende Wirkung erzielt werden kann.

Die im erfindungsgemässen schwindreduzierenden Mittel enthaltenen Hydroxyverbindungen sind Diole, welche insbesondere ausgewählt sind aus der Gruppe umfassend 2,2,-Dimethyl-1,3-pentandiol, 2,5-Dimethyl-2,5-hexandiol, 2-Ethyl-1,3-hexandiol, 1,6-Hexandiol, 1,5-Pentandiol, Hexylenglykol, Polypropylenglykol.

Die im erfindungsgemässen schwindreduzierenden Mittel enthaltenen Etherverbindungen sind vorzugsweise ausgewählt aus der Gruppe umfassend Diethylenglykolmonobutylether, Triethylenglykolmonobutylether, Triethylenglykolmonomethylether, Dipropylenglykolmonobutylether, Ethoxyliertes Neopentylglykol-Addukt.

Das schwindreduzierende Mittel kann entweder als Pulver vorliegen, oder es kann Wasser und/oder ein nicht-wässriges Lösungsmittel enthalten, derart, dass es als Dispersion oder Emulsion oder Lösung vorliegt. Für Dispersionen, Emulsionen und Lösungen ist es bevorzugt, wenn die Summe aus a), b) und c) 50-80 Gew.-% beträgt.

Ein weiterer Aspekt der vorliegenden Erfindung besteht in einem Verfahren zur Reduzierung des Schwindens von hydraulischen Bindemitteln wie Zementen gemäss Euronorm EN 197 in reiner Form oder als Abmischung mit latent hydraulischen Bindemitteln wie Flugasche, Hochofenschlacke, Ölschieferabbrand, natürliche Puzzolane oder Silica Fume oder inerten Füllstoffen wie Steinmehl, sowie daraus hergestelltem Mörtel oder Beton. Erfindungsgemäss wird in dem Verfahren zu einem Gemisch, welches das Bindemittel enthält, ein schwindreduzierendes Mittel gemäss Anspruch 1 zugegeben.

In einer bevorzugten Ausführungsform wird der Schwindreduzierer dem Bindemittelgemisch in einer Menge von 0.001 - 6.0 %, bezogen auf das Bindemittelgewicht zugesetzt. Noch bevorzugter ist ein Anteil von 1-3 Gew.-% (ebenfalls bezogen auf das Bindemittelgewicht) des Schwindreduzierers im Bindemittelgemisch.

Der Schwindreduzierer kann dabei sowohl als Pulver, oder dispergiert bzw. emulgiert in Wasser und/oder einem nicht-wässrigen Lösungsmittel oder gelöst in Wasser und/oder einem nicht-wässrigen Lösungsmittel eingesetzt werden. Der Schwindreduzierer kann vorgemischt in mindestens einem hydraulischen Bindemittel oder in trockenem Mörtel oder Beton zur Anwendung gelangen. Die Zumischung des Schwindreduzierers in das Bindemittelgemisch kann dabei bei der Herstellung des Bindemittels im Werk, vor oder während dem Mahlen erfolgen.

In einer weiteren bevorzugten Ausführungsform kann der Schwindreduzierer dem trockenen oder mit Wasser angemachten Bindemittel, Mörtel oder Beton im Werk, auf der Baustelle, im Mischer, in der Förderpumpe oder über einen statischen Mischer mit einem Pulverdosiergerät oder einem Flüssigdosiergerät direkt in die Mischung zugegeben werden.

Ein letzter Aspekt der vorliegenden Erfindung ist Verwendung eines Mittels gemäss Anspruch 1 zur Reduzierung des Schwindens von hydraulischen Bindemitteln.

Überraschenderweise wurde gefunden, dass mit den oben genannten erfindungsgemässen schwindreduzierenden Mitteln die beton- und mörteltechnischen Eigenschaften wie Verarbeitbarkeit und Festigkeit nicht oder nur in geringem Masse beeinflusst werden. Des weiteren wird die Herstellung von Frost-Tausalz beständigen Betonen durch die Einführung von Luftporen durch entsprechende Zusatzmittel trotz des Einsatzes der schwindreduzierenden Mittel erlaubt. Ein weiterer Vorteil ist in der Wirtschaftlichkeit zu sehen, welche durch den sparsamen Einsatz als auch die problemlose Erhältlichkeit der erfindungsgemässen Substanzen gewährleistet ist.

Die erfindungsgemässen schwindreduzierenden Additive können als Pulver, gelöst in Wasser oder in Kombination mit nicht-wässrigen Lösungsmitteln und/oder anderen Betonzusatzmitteln wie Verflüssigern, Hochleistungsverflüssigern, Luftporenbildnern, Korrosionsinhibitoren, Silica Slurries, Dispergiermitteln u.a. vorliegen und derart zur Anwendung gelangen. Die Zugabe erfolgt üblicherweise in fester oder gelöster Form direkt ins Anmachwasser, zum Zement, zum Trockengemisch oder zur fertigen Beton- oder Mörtelmischung.

Im folgenden wird die vorliegende Erfindung anhand von Beispielen erläutert wobei diese nicht den Schutzbereich einschränkend auszulegen sind.

In den folgenden Beispielen wird der Einfluss von Alkanolaminen, allein oder in Kombination in erfindungsgemässen Schwindreduzierem dargestellt. Als Prüfmischungen wurden Mörtel gewählt, die den Beton simulieren sollen. Die Mischungen setzten sich wie folgt zusammen:

| | |
|---|---|
| Portlandzement Typ CEM I 42.5 | 750.00 g |
| Sand 0- 8 mm | 3150.00 g |
| Wasser | 352.50 g |
| Superverflüssiger auf Melaminbasis | 7.50 g |
| Schwindreduzierer | 11.25 g |

Von diesen Mischungen wurden prismatische Prüfkörper der Grösse 4x4x16 cm mit eingebauten Zapfen hergestellt und daran die Längenänderung gemäss der Norm DIN 52450 gemessen. Die Prüfkörper wurden die ersten 24 Stunden bei 20° C und 95 % relativer Luftfeuchtigkeit und anschliessend bei 23° C und 50 % relativer Feuchtigkeit gelagert.

### Beispiel 1

Dieses Beispiel zeigt den Effekt eines Alkanolamin-Schwindreduzierers auf die Längenänderung nach 28 Tagen.

| Zusatzmittel | Längenänderung nach 28 Tagen |
|---|---|
| Nullversuch (ohne Schwindreduzierer) | - 0.55 ‰ |
| * Schwindreduzierer 1 (bestehend aus PROPA) | - 0.31 ‰ |

| | |
|---|---|
| * Ausserhalb der Erfindung PROPA = N-Propylaminopropanol | |

Es ist in diesem Beispiel zu sehen, dass der Einsatz von 1.5 % (w/w) eines Alkanolamins, bezogen auf den Zement, das Trocknungsschwinden um 40 % zu reduzieren vermag. Die beiden nächsten Beispiele erläutern die Wirkung von Alkanolaminen in Kombination mit Diolen bzw. Ethern.

### Beispiel 2

| Zusatzmittel | Längenänderung nach 28 Tagen |
|---|---|
| Nullversuch (ohne Schwindreduzierer) | - 0.55 ‰ |
| * Schwindreduzierer 2 (bestehend aus Ehdo) | - 0.37 ‰ |
| * Schwindreduzierer 3 (bestehend aus ^{t}Buea) | - 0.28 ‰ |
| Schwindreduzierer 4 (^{t}Buea/Ehdo 1:2) | - 0.22 ‰ |

| | |
|---|---|
| Ehdo = 2-Ethyl-1,3-hexandiol ^{t}Buea = 2-(tert.-Butylamino)-ethanol | |

### Beispiel 3

| Zusatzmittel | Längenänderung nach 28 Tagen |
|---|---|
| Nullversuch (ohne Schwindreduzierer) | - 0.55 ‰ |
| * Schwindreduzierer 5 (bestehend aus TEGBu) - | - 0.36 ‰ |
| * Schwindreduzierer 6 (bestehend aus PROPA) | - 0.30 ‰ |
| Schwindreduzierer 7 (PROPA/TEGBu 1:2) | - 0.25 ‰ |

| | |
|---|---|
| TEGBu = Triethylenglykolmonobutylether PROPA = N-Propylaminopropanol * Ausserhalb der Erfindung | |

Wie aus diesen beiden Beispielen ersichtlich ist, wird der Schwindreduzierende Einfluss der Einzelkomponenten durch die Kombination von Alkanolaminen und Diolen und/oder Ethern überraschenderweise auf synergistische Art und Weise deutlich erhöht.

### Beispiel 4

| Zusatzmittel | Längenänderung nach 28 Tagen |
|---|---|
| Nullversuch (ohne Schwindreduzierer) | - 0.55 ‰ |
| *Schwindreduzierer **5** (bestehend aus TEGBu/Ehdo 1:1) | - 0.35 ‰ |
| * Schwindreduzierer **6** (bestehend aus ^{t}Buea) | - 0.29 ‰ |
| Schwindreduzierer **7** (^{t}Buea/TEGBu/Ehdo 1:1:1) | - 0.24 ‰ |

| | |
|---|---|
| TEGBu = Triethylenglykolmonobutylether Ehdo = 2-Ethyl-1,3-hexandiol ^{t}Buea = 2-(tert.-Butylamino)-ethanol | |

Wie aus diesen drei oben genannten Beispielen ersichtlich ist, wird der schwindreduzierende Einfluss der Einzelkomponenten durch die Kombination von Alkanolaminen und Diolen und/oder Ethern überraschenderweise auf synergistische Art und Weise deutlich erhöht.

### Beispiel 5

Die in diesem Beispiel verwendete Mischung basiert auf dem oben beschriebenen Mörtel, allerdings wurde zusätzlich ein auf Tallöl-Harz basierender Luftporenbildner (ca. 5 %-ig) mit 6 g eingesetzt (d.h. 0.8 Gewichtsprozent auf das Zementgewicht).

| Zusatzmittel | Längenänderung nach 28 Tagen |
|---|---|
| Nullversuch (ohne Schwindreduzierer) | - 0.55 ‰ |
| * Schwindreduzierer **2** (bestehend aus Ehdo) | - 0.34 ‰ |
| Schwindreduzierer **8** (bestehend aus 66 % Ehdo und 10 % nBuea + 24% H₂O) | - 0.33 ‰ |

| | |
|---|---|
| Ehdo = 2-Ethyl-1,3-hexandiol nBuea = 2-(Butylamino)-ethanol * Ausserhalb der Erfindung | |

Es ist grundsätzlich kein Unterschied im Grad der Schwindreduktion zu erkennen, die eingesetzte Menge an Substanz ist jedoch bei der erfindungsgemässen Kombination aus Diol und Alkanolamin bedeutend geringer, was sich u.a. in der, für frostbeständige Betone wichtigen Luftmenge ausdrückt.

| Zusatzmittel | Luftgehalt |
|---|---|
| Nullversuch (ohne Schwindreduzierer) | 8.5 % |
| * Schwindreduzierer **2** (bestehend aus Ehdo) | 2.1 % |
| Schwindreduzierer **8** (bestehend aus 66 % Ehdo und 10 % nBuea und 24% Wasser) | 5.8 % |

Durch die Kombination eines Alkanolamins mit einem Diol wird der Verlust im Luftgehalt durch das sich negativ auswirkende Diol allein tiefer gehalten, ohne dass sich dies im Schwindverhalten manifestiert.

### Beispiel 6

In diesem Beispiel wird aufgezeigt, dass sich ein erfindungsgemässes Schwindreduktionsmittel nur minimal auf die Festigkeitsentwicklung auswirkt.

| Zusatzmittel | Druckfestigkeit | |
|---|---|---|
| | 1 Tag | 28 Tage |
| Nullversuch (ohne Schwindreduzierer) | 24 N/mm² | 49 N/ mm² |
| * Schwindreduzierer **2** (bestehend aus Ehdo) | 16 N/mm² | 45 N/ mm² |
| Schwindreduzierer **8** (bestehend aus 66 % Ehdo + 10 % nBuea + 24% H₂O) | 21 N/mm² | 47 N/ mm² |

| | | |
|---|---|---|
| Ehdo = 2-Ethyl-1,3-hexandiol nBuea = 2-(Butylamino)-ethanol * Ausserhalb der Erfindung | | |

Während der Einsatz eines Diols alleine eine bedeutende Festigkeitsreduktion nach 1 Tag ergibt, weist der mit einem erfindungsgemässen Schwindreduzierer hergestellte Mörtel eine vertretbare Festigkeit auf.

## Patentansprüche

1. Mittel zur Reduzierung des Schwindens von hydraulischen Bindemitteln, **dadurch gekennzeichnet, dass** es
a) 5-40 Gew.-% mindestens eines Alkanolamins der Formel I
R-NH-(AOH),
wobei R eine lineare oder verzweigtkettige aliphatische oder cyclische C₁-C₆-Alkylgruppe ist, und A ist eine C₂H₄- oder C₃H₆-Gruppe, sowie
b) 0-90 Gew.% mindestens einer Hydroxyverbindung, wobei die Hydroxyverbindungen Diole sind, und/oder
c) 0-90 Gew.% mindestens einer Etherverbindung enthält oder daraus besteht,
wobei die Summe von b) und c) mindestens 60 Gew.% beträgt.

2. Schwindreduzierendes Mittel nach Anspruch 1, **dadurch gekennzeichnet, dass** es eine Kombination von
a) 10-40 Gew.% mindestens eines Alkanolamins der Formel I sowie
b) 0-90 Gew.% mindestens einer Hydroxyverbindung und/oder
c) 0-90 Gew.% mindestens einer Etherverbindung enthält oder daraus besteht, wobei die Summe von b) + c) mindestens 60 Gew.% beträgt.

3. Schwindreduzierendes Mittel nach Anspruch 1 oder 2, **dadurch gekennzeichnet, dass** das Alkanolamin ausgewählt ist aus der Gruppe umfassend N-Propylaminopropanol, N-Butylaminopropanol, 2-(n-Butylamino)-ethanol, 2-(tert.-Butylamino)-ethanol, 2-(Cyclohexylamino)-ethanol.

4. Schwindreduzierendes Mittel nach irgendeinem der Ansprüche 1 bis 3, **dadurch gekennzeichnet, dass** die Alkanolamine in freier Form oder als Salze einer organischen oder anorganischen Säure oder einer Mischung vorliegen.

5. Schwindreduzierendes Mittel nach irgendeinem der Ansprüche 1 bis 4, **dadurch gekennzeichnet, dass** die Hydroxyverbindungen Diole sind, welche ausgewählt sind aus der Gruppe umfassend 2,2-Dimethyl-1,3-pentandiol, 2,5Dimethyl-2,5-hexandiol, 2-Ethyl-1,3-hexandiol, 1,6-Hexandiol, 1,5-Pentandiol, Hexylenglykol, Polypropylenglykol.

6. Schwindreduzierendes Mittel nach irgendeinem der Ansprüche 1 bis 5, **dadurch gekennzeichnet, dass** der Ether ausgewählt ist aus der Gruppe umfassend Diethylenglykolmonobutylether, Triethylenglykolmonobutylether, Triethylenglykolmonomethylether, Dipropylenglykolmonobutylether, ethoxyliertes Neopentylglykol-Addukt.

7. Schwindreduzierendes Mittel nach einem der Ansprüche 1 bis 6, **dadurch gekennzeichnet, dass** es Wasser und/oder ein nicht-wässriges Lösungsmittel enthält, dass es eine Dispersion oder eine Emulsion oder eine Lösung ist, und dass vorzugsweise die Summe der Gew.-% des Alkanolamins der Formel I, der Hydroxyverbindung und/oder der Etherverbindung 50-80 Gew.-% betragen.

8. Verfahren zur Reduzierung des Schwindens von hydraulischen Bindemitteln in reiner Form oder als Abmischung mit latent hydraulischen Bindemitteln oder inerten Füllstoffen, sowie daraus hergestelltem Mörtel oder Beton, **dadurch gekennzeichnet, dass** man einem Gemisch, welches das Bindemittel enthält, ein schwindreduzierendes Mittel gemäss irgendeinem der Ansprüche 1 bis 7 zugibt.

9. Verfahren nach Anspruch 8, **dadurch gekennzeichnet, dass** die hydraulischen Bindemittel Zemente, die latent hydraulischen Bindemittel ausgewählt aus der Gruppe umfassend Flugasche, Hochofenschlacke, Ölschieferabbrand, natürliche Puzzolane oder Silicafume und die inerten Füllstoffe Steinmehl sind.

10. Verfahren nach Anspruch 8 oder 9, **dadurch gekennzeichnet, dass** das schwindreduzierende Mittel in einer Menge von 0.001 - 6.0 Gew.-%, bevorzugt von 1 bis 3 Gew.-% bezogen auf das Bindemittelgewicht, zugesetzt wird.

11. Verfahren nach einem der Ansprüche 8 bis 10, **dadurch gekennzeichnet, dass** das schwindreduzierende Mittel ein Pulver, eine Dispersion oder Emulsion in Wasser und/oder einem nicht-wässrigen Lösungsmittel oder eine Lösung in Wasser und/oder einem nicht-wässrigen Lösungsmittel ist.

12. Verfahren nach irgendeinem der Ansprüche 8 bis 11, **dadurch gekennzeichnet, dass** das schwindreduzierende Mittel vorgemischt in hydraulischen Bindemitteln oder in trockenem Mörtel und Beton zur Anwendung gelangt.

13. Verfahren nach irgendeinem der Ansprüche 8 bis 12, **dadurch gekennzeichnet, dass** das schwindreduzierende Mittel bei der Herstellung des Bindemittels im Werk, vor oder während dem Mahlen zugemischt wird.

14. Verfahren nach einem der Ansprüche 8 bis 13, **dadurch gekennzeichnet, dass** das schwindreduzierende Mittel dem trockenen oder mit Wasser angemachten Bindemittel, Mörtel oder Beton im Werk, auf der Baustelle, im Mischer, in der Förderpumpe oder über einen statischen Mischer mit einem Pulverdosiergerät oder einem Flüssigdosiergerät direkt in die Mischung zugegeben wird.

15. Verwendung des Mittels gemäss irgendeinem der Ansprüche 1 bis 7 zur Reduzierung des Schwindens von hydraulischen Bindemitteln.

## Claims

1. An agent for the reduction of shrinkage of hydraulic binders, **characterized in that** it comprises or consists of
a) 5-40% by weight of at least one alkanolamine of formula I
R-NH-(AOH),
wherein R is a linear or a branched aliphatic or cyclic C₁ -C₆ -alkyl group, and A is a C₂H₄- or C₃H₆-group, as well as
b) 0-90% by weight of at least one hydroxy compound, whereby the hydroxy compounds are diols, and/or
c) 0-90% by weight of at least one ether compound,
wherein the sum of b) and c) is at least 60% by weight.

2. Shrinkage reducing agent according to claim 1, **characterized in that** it comprises or consists of a combination of
a) 10-40% by weight of at least one alkanolamine of formula I, as well as
b) 0-90% by weight of at least one hydroxy compound, and/or
c) 0-90% by weight of at least one ether compound, wherein the sum of b) + c) is at least 60% by weight.

3. Shrinkage reducing agent according to claim 1 or 2, **characterized in that** the alkanolamine is selected from the group comprising N-propylaminopropanol, N-butylaminopropanol, 2-(n-butylamino)-ethanol, 2-(tert.-butylamino)-ethanol, 2-(cyclohexylamino)-ethanol.

4. Shrinkage reducing agent according to any of claims 1 to 3, **characterized in that** the alkanolamines are present in free form or as salts of an organic or an inorganic acid or as a mixture.

5. Shrinkage reducing agent according to any of claims 1 to 4, **characterized in that** the hydroxy compounds are diols selected from the group comprising 2,2-dimethyl-1,3-pentanediol, 2,5-dimethyl-2,5-hexanediol, 2-ethyl-1,3-hexanediol, 1,6-hexanediol, 1,5-pentanediol, hexyleneglycol, polypropyleneglycol.

6. Shrinkage reducing agent according to any of claims 1 to 5, **characterized in that** the ether is selected from the group comprising diethylene glycol monobutylether, triethylene glycol monobutylether, triethylene glycol monomethylether, dipropylene glycol monobutylether, ethoxylated neopentylglycol adduct.

7. Shrinkage reducing agent according to any of claims 1 to 6, **characterized in that** it comprises water and/or a non-aqueous solvent, that is a dispersion or an emulsion or a solution, and that preferably the sum of the % by weight of the alkanolamine of formula I, the hydroxy compound and/or the ether compound is 50 to 80% by weight.

8. A method for the reduction of shrinkage of hydraulic binders in pure form or as a mixture with latent hydraulic binders or inert fillers, as well as therof produced mortar or concrete, **characterized in that** a binder comprising mixture is admixed with a shrinkage reducing agent according to any of claims 1 to 7.

9. The method according to claim 8, **characterized in that** the hydraulic binders are cement, the latent hydraulic binders are selected from the group comprising fly ash, blast furnace slag, burned oil shale, natural pozzolanes, or silicafume, and the inert fillers are stone powder.

10. The method according to claim 8 or 9, **characterized in that** the shrinkage reducing agent is added in an amount of 0.001-6.0 % by weight, preferably 1-3 % by weight, based on the weight of the binder.

11. The method according to any of claims 8 to 10, **characterized in that** the shrinkage reducing agent is a powder, a dispersion or an emulsion in water and/or in a non-aqueous solvent, or a solution in water and/or in a non-aqueous solvent.

12. The method according to any of claims 8 to 11, **characterized in that** the shrinkage reducing agent is applied pre-mixed in hydraulic binders or in dry mortar and concrete.

13. The method according to any of claims 8 to 12, **characterized in that** the shrinkage reducing agent is admixed to the binder during the production of the binder in the factory either prior to or during the grinding.

14. The method according to any of claims 8 to 13, **characterized in that** the shrinkage reducing agent is added to the dry or the water-admixed binder, mortar or concrete in the factory, at the building site, in the mixing apparatus, in the delivery pump, or by means of a static mixer with a powder dosing apparatus or a liquid dosing apparatus directly into the mixture.

15. Use of an agent according to any of claims 1 to 7 for reducing the shrinkage of hydraulic binders.

## Revendications

1. Agent pour la réduction du retrait de liants hydrauliques, **caractérisé en ce qu'**il contient ou est constitué par
a) 5-40% en poids d'au moins une alcanolamine de formule I
R-NH-(AOH),
R représentant un groupe C₁-C₆-alkyle linéaire ou ramifié, aliphatique ou acyclique et A représentant un groupe C₂H₄ OU C₃H₆, ainsi que
b) 0-90% en poids d'au moins un composé hydroxy, les composés hydroxy étant des diols, et/ou
c) 0-90% en poids d'au moins un composé éther,
la somme de b) et de c) valant au moins 60% en poids.

2. Agent pour la réduction du retrait selon la revendication 1, **caractérisé en ce qu'**il contient ou est constitué par une combinaison de
a) 10-40% en poids d'au moins une alcanolamine de formule I ainsi que
b) 0-90% en poids d'au moins un compose hydroxy et/ou
c) 0-90% en poids d'au moins un composé éther,
la somme de b) + c) valant au moins 60% en poids.

3. Agent pour la réduction du retrait selon la revendication 1 ou 2, **caractérisé en ce que** l'alcanolamine est choisie dans le groupe comprenant le N-propylaminopropanol, le N-butylaminopropanol, le 2-(n-butylamino)-éthanol, le 2-(tert-butylamino)-éthanol, le 2-(cyclohexylamino)-éthanol.

4. Agent pour la réduction du retrait selon l'une quelconque des revendications 1 à 3, **caractérisé en ce que** les alcanolamines se trouvent sous forme libre ou de sels d'un acide organique ou inorganique ou d'un mélange.

5. Agent pour la réduction du retrait selon l'une quelconque des revendications 1 à 4, **caractérisé en ce que** les composés hydroxy sont des diols qui sont choisis dans le groupe comprenant le 2,2-diméthyl-1,3-pentanediol, le 2,5-diméthyl-2,5-hexanediol, le 2-éthyl-1,3-hexanediol, le 1,6-hexanediol, le 1,5-pentanediol, l'hexylèneglycol, le polypropylèneglycol.

6. Agent pour la réduction du retrait selon l'une quelconque des revendications 1 à 5, **caractérisé en ce que** l'éther est choisi dans le groupe comprenant le diéthylèneglycolmonobutyléther, le triéthylèneglycolmonobutyléther, le triéthylèneglycolmonométhyléther, le dipropylèneglycolmonobutyléther, un produit d'addition éthoxylé de néopentylglycol.

7. Agent pour la réduction du retrait selon l'une quelconque des revendications 1 à 6, **caractérisé en ce qu'**il contient de l'eau et/ou un solvant non aqueux, **en ce qu'**il s'agît d'une dispersion ou d'une émulsion ou d'une solution et **en ce que** de préférence la somme des % en poids de l'alcanolamine de formule I, du composé hydroxy et/ou du composé éther vaut 50-80% en poids.

8. Procédé pour la réduction du retrait de liants hydrauliques sous forme pure ou sous forme de mélange avec des liants hydrauliques latents ou des charges inertes, ainsi que du mortier ou du béton préparé à partir de ceux-ci, **caractérisé en ce qu'**on ajoute à un mélange qui contient le liant un agent pour la réduction du retrait selon l'une quelconque des revendications 1 à 7.

9. Procédé selon la revendication 8, **caractérisé en ce que** les liants hydrauliques sont les ciments, les liants hydrauliques latents sont choisis dans le groupe comprenant les cendres volantes, les scories de haut-fourneau, les résidus de combustion de schiste bitumineux, les pouzzolanes naturelles ou les silices pulvérulentes et les charges inertes sont les farines de pierre.

10. Procédé selon la revendication 8 ou 9, **caractérisé en ce que** l'agent pour la réduction du retrait est ajouté en une quantité de 0,001-6,0% en poids, de préférence de 1 à 3% en poids, par rapport au poids du liant.

11. Procédé selon l'une quelconque des revendications 8 à 10, **caractérisé en ce que** l'agent pour la réduction du retrait est une poudre, une dispersion ou une émulsion dans l'eau et/ou un solvant non aqueux ou une solution dans l'eau et/ou un solvant non aqueux.

12. Procédé selon l'une quelconque des revendications 8 à 11, **caractérisé en ce que** l'agent pour la réduction du retrait est utilisé en étant mélangé au préalable dans des liants hydrauliques ou dans du mortier et dans du béton secs.

13. Procédé selon l'une quelconque des revendications 8 à 12, **caractérisé en ce que** l'agent pour la réduction du retrait est mélangé lors de la préparation du liant dans l'usine, avant ou pendant le broyage.

14. Procédé selon l'une quelconque des revendications 8 à 13, **caractérisé en ce que** l'agent pour la réduction du retrait est ajouté au liant, au mortier ou au béton sec ou gâché à l'eau dans l'usine, sur le chantier, dans le mélangeur, dans la pompe de transport on via une mélanger statique à l'aide d'une appareil de dosage de poudré ou d'un appareil de dosage de liquide, directement dans le mélange.

15. Utilisation de l'agent selon l'une quelconque des revendications 1 à 7 pour la réduction du retrait de liants hydrauliques.
